# EUROPEAN PATENT SPECIFICATION

(11) **EP 4 343 413 B1**
(45) Date of publication and mention of the grant of the patent: **04.03.2026**
(21) Application number: 22197468.6
(22) Date of filing: 23.09.2022
(51) Int. Cl.: G02C 5/00, G02C 5/08, G02C 5/20

(54) **EYEWEAR DEVICE**
BRILLENVORRICHTUNG
DISPOSITIF DE LUNETTES

(43) Date of publication of application: 27.03.2024
(73) Proprietor: Nokia Technologies Oy, 02610 Espoo (FI)
(72) Inventor: RADIVOJEVIC, Zoran, Cambridge, CB3 0FA (GB); VAN DEN BROECK, Marc, 2860 Sint-Katelijne-Waver (BE)
(74) Representative: Whiting, Gary

(56) References cited:
- EP-B1- 2 904 448
- WO-A1-2022/091064
- US-A1- 2007 132 938
- US-B1- 11 409 127

## Description

### Field

The present specification relates to eyewear devices, such as smart glasses.

### Background

The use of eyewear devices, such as smart glasses is known. There remains a need for further developments in this field. For example, there remains a need for alternative arrangements for operating eyewear devices.

EP2904448 A1 discloses a pair of foldable spectacles having a two-lens front piece (30) to which two side pieces (20a, 20b) are pivotally connected by means of resilient corner hinges (25). The front piece (30) has a central hinge assembly (40) by means of which the front piece can be folded to a position where its lenses (31, 32) are held between and protected by the side pieces (20a, 20b). Each side piece (20a, 20b) has a first portion (21) which is connected to the front lens piece (30) by a resilient corner hinge (25), a second portion (22) which forms a free end portion of the side piece, and a resilient transition portion (23) between the first and second portions (21, 22). Thanks to the resilient corner hinges (25) and the resilient transition portion (23) of the two side pieces (20a, 20b), the spectacles (10) in use are held in place in a reliable manner since the side pieces (20a, 20b) are pressed against the side of the user's head.

### Summary

The invention provides an eyewear device as defined by claim 1.

Each of said first hinges may comprise a spring (or some other resilient means) to move the respective arm to said partially open configuration.

According to the invention, each of said second hinges is a bistable hinge. Each of said second hinges may open to a pre-defined angle (e.g. 160 degrees) in the partially open configuration. Moreover, in the partially open configuration, pushing outwards on the second hinges may trigger the respective bistable hinges to urge the distal ends of the respective arms inwards (e.g. urged towards the user's head). This can be useful, for example, in the event that the user might make significant physical movements (e.g. whilst playing sport).

In some example embodiments, in a fully opened configuration, ceasing to push outwards on the second hinges triggers the respective bistable hinges to move the first and second arms to the partially open configuration.

The locking feature of the frame may be a magnetic locking feature. Furthermore, the second hinges of said first and second arms may be magnetically locked to said locking feature in the closed configuration.

The first and second arms may each comprise a magnetic portion at the respective distal ends for magnetically locking said arms to the first hinges of the respective arms in the closed configuration.

Some example embodiments further comprise at least one channel carrying signal and power connections. Furthermore, some or all of said hinges may include electric I/O lines carrying said signal and power connections.

The locking feature of the frame may be a hinge such that the frame is foldable about the locking feature.

### Brief description of the drawings

Example embodiments will now be described, by way of example only, with reference to the following schematic drawings, in which:
FIG. 1 shows an eyewear device in accordance with an example embodiment;
FIG. 2 shows an eyewear device in a closed condition in accordance with an example embodiment;
FIG. 3 is a flow chart showing an algorithm in accordance with an example embodiment;
FIG. 4 shows an eyewear device in a partially open configuration in accordance with an example embodiment;
FIG. 5 shows an eyewear device that has been placed on a user's head in accordance with an example embodiment;
FIG. 6 is a plan view of an eyewear device being pushed towards a user's head in accordance with an example embodiment;
FIG. 7 shows an eyewear device being worn by a user in accordance with an example embodiment;
FIG. 8 is a flow chart showing an algorithm in accordance with an example embodiment; and
FIGS. 9 and 10 show an eyewear device being pushed against a user in accordance with example embodiments.

### Detailed description

The scope of protection sought for various embodiments of the disclosure is set out by the independent claims. The embodiments and features, if any, described in the specification that do not fall under the scope of the independent claims are to be interpreted as examples useful for understanding various embodiments of the disclosure.

In the description and drawings, like reference numerals refer to like elements throughout.

A common form factor for eyewear devices (such as smart glasses) requires two-handed operation whilst handling the device (e.g. taking the eyewear device from a safe box, opening the device, adjusting the size, placing the eyewear device on the user's head, removing from the user's head, closing the arms and placing into the storage box). Handling smart glasses and other eyewear devices using two hands is an effort that a user may need to perform frequently.

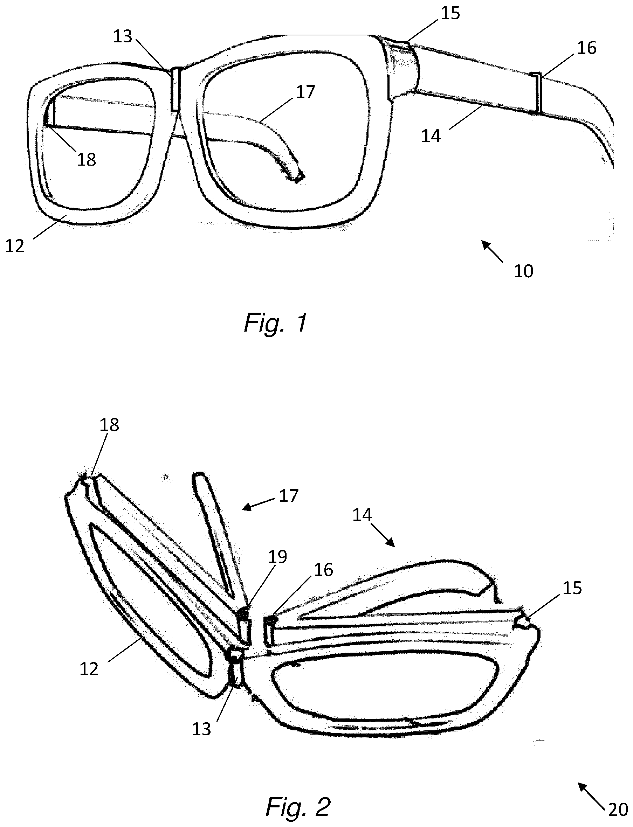

FIG. 1 shows an eyewear device, indicated generally by the reference numeral 10, in accordance with an example embodiment.

The eyewear device 10 comprises a frame 12 having a locking feature 13, a first arm 14 and a second arm 17. The first and second arms both have a frame end and a distal end. The frame end of the first arm 14 shown in FIG. 1 is attached to the frame 12 at a first hinge 15 of the first arm. Similarly, the frame end of the second arm 16 shown in FIG. 1 is attached to the frame 12 at a first hinge 18 of the second arm. Of course, the hinges 15 and 18 could form part of the frame, rather than the respective arms.

The first arm 14 has a second hinge 16 between the frame end and the distal end. As discussed in detail below, in a closed configuration of the eyewear device, the second hinge 16 of the first arm 14 is releasably locked to the locking feature 13 of the frame 12. The second arm 17 has a similar second hinge, which is not clearly visible in FIG. 1, but is discussed in detail below (and is indicated by the reference 19).

FIG. 2 shows an eyewear device, indicated generally by the reference numeral 20, that is in a closed condition in accordance with an example embodiment.

The eyewear device 20 includes the frame 12 (including the locking feature 13), the first arm 14 and the second arm 17 described above. The first hinges 15 and 18 of the first and second arms respectively are shown attaching the respective arms to the frame 12.

The eyewear device 20 is partially folded about the locking feature 13 (which in this embodiment acts as a central hinge of the frame 12), but this is not essential to all example embodiments.

The first and second arms are folded (so that they eyewear device is in a closed configuration) such that the second hinge 16 of the first arm 14 is releasably locked to the locking feature 13 of the frame 12. Similarly, the second arm has a second hinge 19 (which was not visible in FIG. 1) that is releasably locked to the locking feature 13 of the frame 12.

Although the eyewear device 20 is in a closed configuration, the device 20 could be further closed by releasably locking the distal ends of the first and second arms to the first and second hinges 18 and 19 respectively. Such an arrangement is described further below.

The first hinges 15 and 18 are elastic so that, when that second hinges 16 and 19 are not locked to the locking feature 13, the hinges 15 and 18 tend to urge the first and second arms 15 and 18 respectively away from the frame. The elasticity of the hinges may be implemented using springs. The hinges 15 and 18 may also be magnetic and the distal end of the first and second arms may be ferromagnetic so that the distal ends of the arms can be locked to the respective first hinges in the closed configuration. Other (non-magnetic) locking arrangements could also be provided.

The second hinges 16 and 19 may be magnetic so that they can be magnetically locked to the locking feature 13 in the closed configuration (i.e. the locking feature may be a magnetic locking feature). The second hinges 16 and 19 may be bistable elastic hinges, as discussed further below.

In some example embodiments, the magnetic locking of the distal ends of the arms to the first hinges is weaker than the magnetic locking of the second hinges to the locking feature 13. This enables the eyewear device to be opened by a user releasing the locking feature 13 only.

As discussed in detail below, the configuration of the eyewear device 10 enables easy operation and transformation (e.g. from a closed configuration of FIG. 2 to the open configuration of FIG. 1 and vice-versa) by a user. For example, a user may be able to use a single hand to take the eyewear device (from a breast pocket or a storage case, for example) and unlock the device to initiate automatic expansion into a half/partially-opened configuration (e.g. the configuration shown in FIG. 2) in which the eyewear device can easily be placed on the head and pushed towards the head. Similarly, the eyewear device can be taken by single hand and pushed (e.g. against the user's body) to fold the device into a closed form ready for storage.

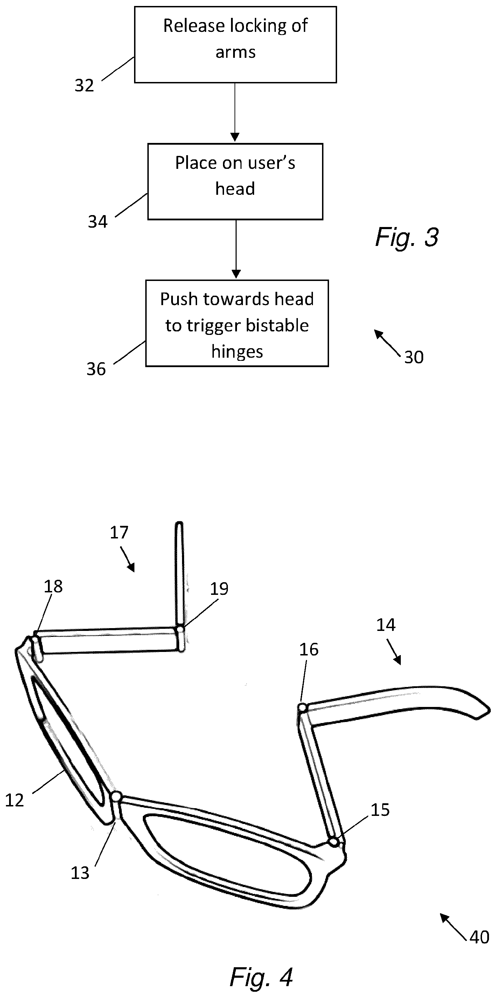

FIG. 3 is a flow chart showing an algorithm, indicated generally by the reference numeral 30, in accordance with an example embodiment. The algorithm 30 starts with an eyewear device being a closed configuration (such as the configuration shown in FIG. 2)

The algorithm 30 starts at operation 32, where the locking of the first arm 14 and the second arm 17 of the eyewear device to the locking feature 13 of the frame is released. The operation 32 may be implemented by squeezing on the locking mechanism 13, but the skilled person will be aware of many alternative possible implementations.

The first hinge 15 of the first arm and the first hinge 18 of the second arm are elastic in order to move the respective first and second arms from the closed configuration (e.g. as shown in FIG. 2) to a partially open configuration (as discussed below with reference to FIG. 4) on release of the releasable locking of the respective arm to the locking feature 13 of the frame.

FIG. 4 shows an eyewear device, indicated generally by the reference numeral 40, in accordance with an example embodiment. The eyewear device 40 is in the partially open configuration. The eyewear device 40 includes the frame 12 (including the locking feature 13), the first and second arms 14, 17, the first hinges 15 and 18 and the second hinges 16 and 19 described above.

As discussed above, on releasing the locking of the first and second arms to the locking feature 13, the elastic nature of the first hinges 15 and 18 urge the first and second arms away from the frame 12 (i.e. into the partially open configuration). This movement may be caused by springs that form part of the first hinges.

The second hinges 16 and 19 are be bistable hinges (e.g. bistable elastic hinges having springs). When a user releases the locking feature 13 (e.g. by squeezing on the locking feature), the second hinges 16 and 19 are elastically elongated, for example to a pre-defined angle (such as 160 degrees). This wide opening angle is suitable for easy acceptance of user head (when placing the eyewear device on the head). As discussed further below, if the angle between the distal ends of the first and second arms exceeds a given angle (e.g. 160 degrees), the bistable mechanism is enabled to lock the ends of the arms within a defined range (e.g. 180 to 190 degrees).

Returning to the algorithm 30, at operation 34, the eyewear device (which is now in the partially open configuration shown in FIG 4) is placed on a user's head.

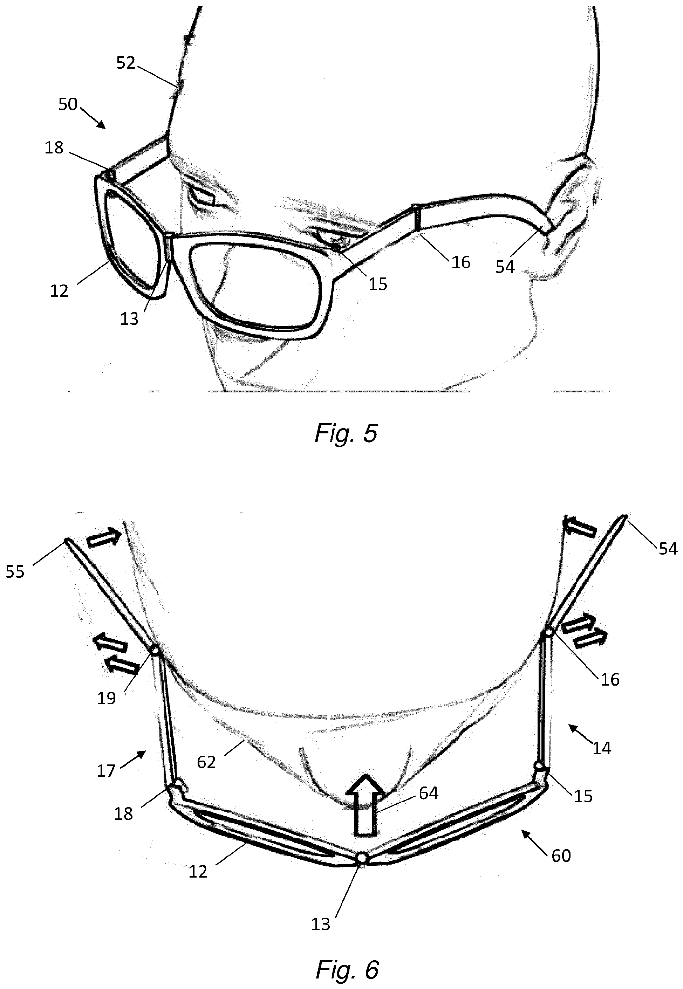

FIG. 5 shows an eyewear device 50 that has been placed on a user's head 52 in accordance with the operation 34 of the algorithm 30. The eyewear device 50 includes the frame 12 (including the locking feature 13), the first and second arms 14, 17, the first hinges 15 and 18 and the second hinges 16 and 19 described above.

In the eyewear device 50, the first hinges 15 and 18 of the first and second arms respectively are opened to about 90 to 100 degrees and the second hinges of the first and second arms are opened so that the arms present a wide angle for easy positioning of the eyewear device onto the head.

At operation 36 of the algorithm 30, the eyewear device (which has been placed on the user's head in the operation 34) is pushed towards the user's head. As discussed further below, the operations 34 and 36 cause the eyewear device to move from the partially opened configuration (e.g. as shown in FIG. 4) to the open configuration (e.g. as shown in FIG. 1).

FIG. 6 is a plan view of an eyewear device 60 being pushed towards a user's head 62, in accordance with an example embodiment. The eyewear device 60 includes the frame 12, the locking feature 13, the first arm 14 (having first hinge 15 and second hinge 16), and the second arm 17 (having first hinge 18 and second hinge 19) described above.

FIG. 6 shows the position of the eyewear devices when the eyewear device has been placed on the user's head in the operation 34 of the algorithm 30. The arrow 64 indicates the action of the operation 36.

When the eyewear device 60 is pushed towards the user's head, the second hinges 16 and 19 are pushed outwards until they are at or above the predefined bistable angle (e.g. 160 degrees). This activates the bistable mechanism that forces distal ends 54 and 55 of the first and second arms respectively to be urged inwards such that the arms can be locked around the user's head.

In other words, pushing the frame 12 towards and the user's head (as indicated by the arrow 64) results in the bistable mechanism of the second hinges 16 and 19 being activated to lock the eyewear device in place. In this fully open configuration, the first and second arms of the eyewear device may be slightly bent around the user's head and may provide a gentle push force on back of the user's head, thereby safely and elastically holding the eyewear device in place. This arrangement may be particularly useful if the user is engaging in physical activity whilst wearing the eyewear device (of if the head of the user is moving significantly for some other reason).

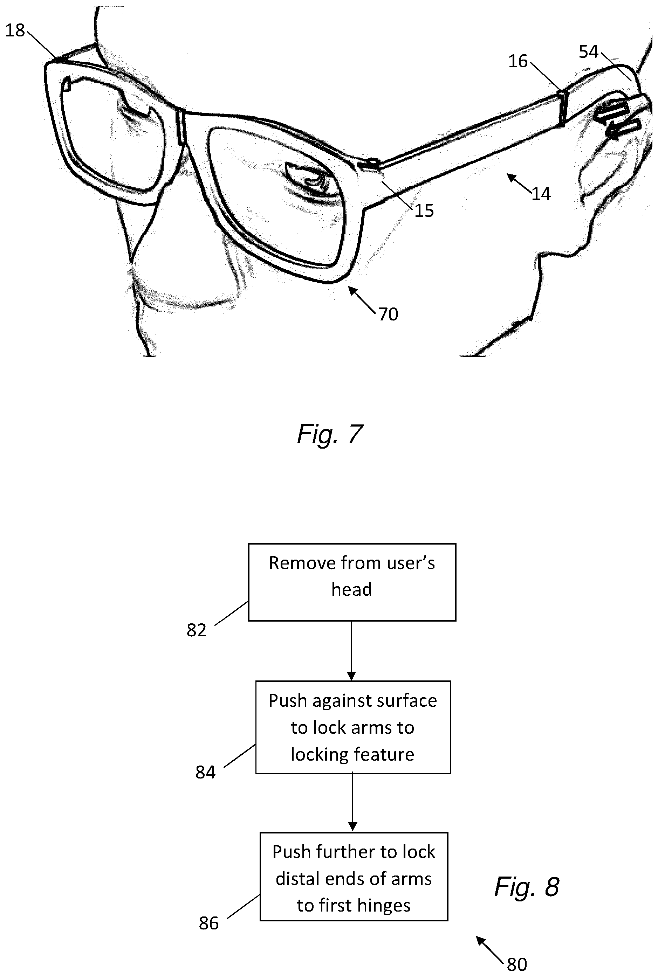

FIG. 7 shows an eyewear device 70 being worn by a user 72 in accordance with an example embodiment (e.g. on completion of the algorithm 30). The eyewear device 70 includes the frame 12 (including the locking feature 13), the first and second arms 14, 17, the first hinges 15 and 18, the second hinges 16 and 19 described above and the distal ends 54 and 55 (only some of which are visible in FIG. 7). The first hinges 15 and 18 of the first and second arms respectively are opened to about 90 to 100 degrees and the bistable mechanism of the second hinges has been triggered such that the distal ends of the arms are urged inwards (only the distal end 54 of the first arm 14 is visible in FIG. 7).

Thus, the algorithm 30 starts with an eyewear device is a closed configuration (such as the configuration shown in FIG. 2) and results in the eyewear device being unfolded to an open configuration (such as the configuration shown in FIG. 1). A user may be able to unlock an eyewear device in the locked configuration shown in FIG. 2 using a single hand (e.g. by squeezing on the central hinge using two fingers while holding the device) so that the device pops-up into the half/partially-open configuration which is ready for easy placement on the user's head. The user can then push the eyewear device towards the head to initiate the fully opened configuration; again this could be carried out in a single-handed operation.

FIG. 8 is a flow chart showing an algorithm, indicated generally by the reference numeral 80, in accordance with an example embodiment. The algorithm 80 starts with an eyewear device being worn and in a fully open configuration (e.g. as shown in FIG. 7).

The algorithm starts at operation 82, where the eyewear device is removed from a user's head. As a result, the second hinges 16, 19 are no longer pushed outwards (by the action of the user's head). This may trigger the respective bistable hinges of the first and second arms to move those arms to the partially open configuration (e.g. the configuration shown in FIG. 4).

At operation 84, the user pushes the eyewear device against a surface to urge the second hinges 16 and 19 of the first and second arms 14 and 17 respectively into contact with the locking feature 13 of the frame 12 to releasably lock the respective arms to the locking feature of the frame.

Finally, at operation 86, the eyewear device is pushed against the surface to urge the distal ends 54, 55 of the first and second arms into contact with the respective first hinges 15 and 18 in order to releasably lock said distal ends to said first hinges. Note that in some example embodiments, the operation 86 may be omitted.

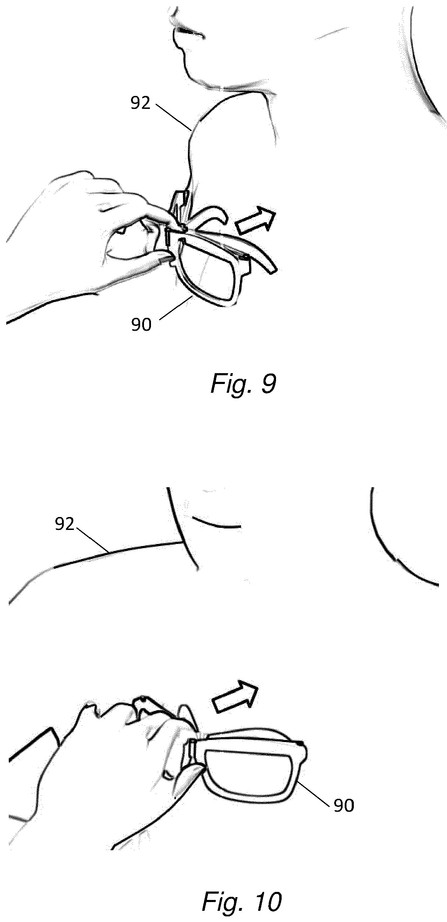

The surface that the eyewear device is pushed against in the algorithm 80 may be part of the user's body. This is shown in FIGS. 9 and 10, as discussed below.

FIG. 9 shows an eyewear device 90 being pushed against a user 92 in accordance with an example embodiment.

As shown in FIG. 9, when the eyewear device is taken off the head (while holding for central locking hinge), the eyewear device is in the half/partially-opened configuration which then can be pushed easily against user body (for example) to fold and close the eyewear device. While folding, the spring in the hinges are loaded and locked so that the magnetic hinges engage and lock the eyewear device in a compact locked form. In other words, when the eyewear device is pushed sufficiently, the magnetised hinges are in physical proximity and magnetic forces start acting and holding the frame and hinges together. This provides a locked configuration in which the eyewear device is retained in a folded compact form (with loaded hinges ready for unlocking and unfolding). In the closed/locked configuration, the user may place the eyewear device in a breast-pocket or safe box for storage (for example).

When user wants to put the eyewear device back on the head, the locking mechanisms can be released to initiate the half/partially-opened configuration, as discussed in detail above. For example, by placing the user's fingers in a space between the hinges, the user can initiate decoupling of the magnetic hinges, such that elastic preloaded forces (in the hinges) unfold the arms so that the eyewear devices "pops-up" into the half/partially-opened configuration. The eyewear device is then ready to be placed on the user's head, as discussed in detail above.

FIG. 10 shows an eyewear device 90 being pushed being pushed further against the user 92 in order to implement the operation 86 (in which the distal ends are magnetically locked in the fully closed configuration).

The frame and/or arms of the eyewear device may comprise at least one channel carrying signal and power connections. Some or all of said hinges may include electric I/O lines carrying said signal and power connections (i.e. serving as signal and power connections between the parts of the eyewear device).

Some or all of the hinges may be made of magnetic material or alternatively may contain small magnets. For example, the first hinges 15 and 18 may be implemented using springs in their inner structure enabling an elastic elongation in range of about 0-100 degrees (e.g. 0 degrees in the closed configuration and 90-100 degrees in the fully open configuration).

The eyewear devices described herein may be smart glasses, but this is not essential to all example embodiments. For example, the principles described herein may be applicable to other eyewear devices, such as safety glasses or eyesight correcting glasses.

If desired, the different functions discussed herein may be performed in a different order and/or concurrently with each other. Furthermore, if desired, one or more of the above-described functions may be optional or may be combined.

## Claims

1. An eyewear device (10, 50, 60, 70, 90) comprising:
a frame (12) having a locking feature (13);
a first arm (14) having a frame end and a distal end, the first arm comprising: a first hinge (15) at the frame end attaching the first arm to the frame; and a second hinge (16) between the frame end and the distal end, wherein the second hinge of the first arm is a bistable hinge , and in closed configuration of the eyewear device, the second hinge of the first arm is releasably locked to the locking feature of the frame; and
a second arm (17) having a frame end and a distal end, the second arm comprising: a first hinge (18) at the frame end attaching the second arm to the frame; and a second hinge (19) between the frame end and the distal end, wherein, the second hinge of the second arm is a bistable hinge, and in the closed configuration of the eyewear device, the second hinge of the second arm is releasably locked to the locking feature of the frame,
wherein:
the first hinges of the first and second arms are elastic in order to move the respective first and second arms from the closed configuration to a partially open configuration on release of the releasable locking of the respective arm to the locking feature of the frame.

2. An eyewear device as claimed in claim 1, wherein each of said first hinges (15, 18) comprises a spring to move the respective arm to said partially open configuration.

3. An eyewear device as claimed in any one of the preceding claims, wherein each of said second hinges opens to a pre-defined angle in the partially open configuration.

4. An eyewear device as claimed in any one of the preceding claims, wherein, in the partially open configuration, pushing outwards on the second hinges triggers the respective bistable hinges to urge the distal ends of the respective arms inwards.

5. An eyewear device as claimed in any one of the preceding claims, wherein, in a fully opened configuration, ceasing to push outwards on the second hinges triggers the respective bistable hinges to move the first and second arms to the partially open configuration.

6. An eyewear device as claimed in any one of the preceding claims, wherein
the locking feature of the frame is a magnetic locking feature; and
the second hinges of said first and second arms are magnetically locked to said locking feature in the closed configuration.

7. An eyewear device as claimed in any one of the preceding claims, wherein the first and second arms each comprise a magnetic portion at the respective distal ends (54, 55) for magnetically locking said arms to the first hinges of the respective arms in the closed configuration.

8. An eyewear device as claimed in any one of the preceding claims, further comprising at least one channel carrying signal and power connections.

9. An eyewear device as claimed in claim 8, wherein some or all of said hinges include electric I/O lines carrying said signal and power connections.

10. An eyewear device as claimed in any one of the preceding claims, wherein the locking feature of the frame is a hinge such that the frame is foldable about the locking feature.

## Patentansprüche

1. Brillenvorrichtung (10, 50, 60, 70, 90), die Folgendes umfasst:
einen Rahmen (12) mit einem Verriegelungsmerkmal (13);
einen ersten Arm (14) mit einem Rahmenende und einem distalen Ende, wobei der erste Arm Folgendes umfasst: ein erstes Scharnier (15), am Rahmenende, das den ersten Arm am Rahmen befestigt; und ein zweites Scharnier (16) zwischen dem Rahmenende und dem distalen Ende, wobei das zweite Scharnier des ersten Arms ein bistabiles Scharnier ist, und das zweite Scharnier des ersten Arms in einer geschlossenen Auslegung der Brillenvorrichtung lösbar am Verriegelungsmerkmal des Rahmens verriegelt ist; und
einen zweiten Arm (17) mit einem Rahmenende und einem distalen Ende, wobei der zweite Arm Folgendes umfasst: ein erstes Scharnier (18), am Rahmenende, das den zweiten Arm am Rahmen befestigt; und ein zweites Scharnier (19) zwischen dem Rahmenende und dem distalen Ende, wobei das zweite Scharnier des zweiten Arms ein bistabiles Scharnier ist, und das zweite Scharnier des zweiten Arms in der geschlossenen Auslegung der Brillenvorrichtung lösbar am Verriegelungsmerkmal des Rahmens verriegelt ist,
wobei:
die ersten Scharniere des ersten und des zweiten Arms elastisch sind, um den ersten bzw. den zweiten Arm nach Lösen der lösbaren Verriegelung des jeweiligen Arms am Verriegelungsmerkmal des Rahmens aus der geschlossenen Auslegung zu einer teilweise offenen Auslegung zu bewegen.

2. Brillenvorrichtung nach Anspruch 1, wobei jedes der ersten Scharniere (15, 18) eine Feder umfasst, um den jeweiligen Arm in die teilweise offene Auslegung zu bewegen.

3. Brillenvorrichtung nach einem der vorhergehenden Ansprüche, wobei sich jedes der zweiten Scharniere in der teilweise offenen Auslegung in einen vordefinierten Winkel öffnet.

4. Brillenvorrichtung nach einem der vorhergehenden Ansprüche, wobei das Drücken der zweiten Scharniere in der teilweise offenen Auslegung nach außen auslöst, dass die jeweiligen bistabilen Scharniere die distalen Enden der jeweiligen Arme nach innen drängen.

5. Brillenvorrichtung nach einem der vorhergehenden Ansprüche, wobei das Beenden des Drückens der zweiten Scharniere in einer vollständig geöffneten Auslegung nach außen auslöst, dass die jeweiligen bistabilen Scharniere den ersten und den zweiten Arm in die teilweise offene Auslegung bewegen.

6. Brillenvorrichtung nach einem der vorhergehenden Ansprüche, wobei
das Verriegelungsmerkmal des Rahmens ein magnetisches Verriegelungsmerkmal ist; und
die zweiten Scharniere des ersten und des zweiten Arms in der geschlossenen Auslegung magnetisch am Verriegelungsmerkmal verriegelt sind.

7. Brillenvorrichtung nach einem der vorhergehenden Ansprüche, wobei der erste und der zweite Arm jeweils an den jeweiligen distalen Enden (54, 55) einen magnetischen Abschnitt zum magnetischen Verriegeln der Arme an den ersten Scharnieren der jeweiligen Arme in der geschlossenen Auslegung umfassen.

8. Brillenvorrichtung nach einem der vorhergehenden Ansprüche, die ferner mindestens einen Kanal umfasst, in dem sich Signal- und Stromverbindungen befinden.

9. Brillenvorrichtung nach Anspruch 8, wobei einige oder alle der Scharniere elektrische I/O-Leitungen beinhalten, in denen sich die Signal- und die Stromverbindungen befinden.

10. Brillenvorrichtung nach einem der vorhergehenden Ansprüche, wobei das Verriegelungsmerkmal des Rahmens ein Scharnier ist, derart, dass der Rahmen um das Verriegelungsmerkmal klappbar ist.

## Revendications

1. Dispositif d'article de lunetterie (10, 50, 60, 70, 90) comprenant :
une monture (12) ayant un élément de verrouillage (13) ;
une première branche (14) ayant une extrémité de monture et une extrémité distale, la première branche comprenant : une première charnière (15) sur l'extrémité de monture fixant la première branche à la monture ; et une deuxième charnière (16) entre l'extrémité de monture et l'extrémité distale, dans lequel la deuxième charnière de la première branche est une charnière bistable, et dans une configuration fermée du dispositif d'article de lunetterie, la deuxième charnière de la première branche est verrouillée de manière libérable sur l'élément de verrouillage de la monture ; et
une deuxième branche (17) ayant une extrémité de monture et une extrémité distale, la deuxième branche comprenant : une première charnière (18) sur l'extrémité de monture fixant la deuxième branche à la monture ; et une deuxième charnière (19) entre l'extrémité de monture et l'extrémité distale, dans lequel la deuxième charnière de la deuxième branche est une charnière bistable, et dans la configuration fermée du dispositif d'article de lunetterie, la deuxième charnière de la deuxième branche est verrouillée de manière libérable sur l'élément de verrouillage de la monture,
dans lequel :
les premières charnières des première et deuxième branches sont élastiques afin de faire passer les première et deuxième branches respectives de la configuration fermée à une configuration partiellement ouverte à la libération du verrouillage libérable de la branche respective sur l'élément de verrouillage de la monture.

2. Dispositif d'article de lunetterie selon la revendication 1, dans lequel chacune desdites premières charnières (15, 18) comprend un ressort pour faire passer la branche respective à ladite configuration partiellement ouverte.

3. Dispositif d'article de lunetterie selon l'une des revendications précédentes, dans lequel chacune desdites deuxièmes charnières s'ouvre selon un angle prédéfini dans la configuration partiellement ouverte.

4. Dispositif d'article de lunetterie selon l'une des revendications précédentes, dans lequel, dans la configuration partiellement ouverte, le fait de pousser les deuxièmes charnières vers l'extérieur déclenche les charnières bistables respectives pour qu'elles pressent les extrémités distales des branches respectives vers l'intérieur.

5. Dispositif d'article de lunetterie selon l'une des revendications précédentes, dans lequel, dans une configuration entièrement ouverte, le fait de cesser de pousser les deuxièmes charnières vers l'extérieur déclenche les charnières bistables respectives pour qu'elles fassent passer les première et deuxième branches à la configuration partiellement ouverte.

6. Dispositif d'article de lunetterie selon l'une des revendications précédentes, dans lequel
l'élément de verrouillage de la monture est un élément de verrouillage magnétique ; et
les deuxièmes charnières desdites première et deuxième branches sont verrouillées magnétiquement sur ledit élément de verrouillage dans la configuration fermée.

7. Dispositif d'article de lunetterie selon l'une des revendications précédentes, dans lequel les première et deuxième branches comprennent chacune une partie magnétique sur les extrémités distales (54, 55) respectives pour verrouiller magnétiquement lesdites branches aux premières charnières des branches respectives dans la configuration fermée.

8. Dispositif d'article de lunetterie selon l'une des revendications précédentes, comprenant en outre au moins un canal transportant des connexions de signal et d'alimentation.

9. Dispositif d'article de lunetterie selon la revendication 8, dans lequel certaines ou toutes les charnières comportent des lignes d'entrée/sortie électriques transportant lesdites connexions de signal et d'alimentation.

10. Dispositif d'article de lunetterie selon l'une des revendications précédentes, dans lequel l'élément de verrouillage de la monture est une charnière telle que la monture est pliable autour de l'élément de verrouillage.
